# EUROPEAN PATENT SPECIFICATION

(11) **EP 0 729 521 B1**
(45) Date of publication and mention of the grant of the patent: **14.04.1999**
(21) Application number: 95900567.9
(22) Date of filing: 16.11.1994
(51) Int. Cl.: C25C 3/08, C25C 7/00

(54) **REFRACTORY SLAB JOINING SYSTEM**
VERBINDUNGSSYSTEM FÜR FEUERFESTE STEINE
SYSTEME DE JOINT POUR BRIQUE REFRACTAIRE

(30) Priority: 16.11.1993 AU PM2463/93
(43) Date of publication of application: 04.09.1996
(73) Proprietor: COMALCO ALUMINIUM, LTD., Melbourne Victoria 3000 (AU)
(72) Inventor: CROZIER, Christopher Luke, Fitzroy, VIC 3065 (AU); LISTON, Brian Joseph, Mount Waverley, VIC 3149 (AU); STEWART, Karl William, Kinglake West, VIC 3757 (AU)
(74) Representative: Hallybone, Huw George
(86) International application number: AU9400705
(87) International publication number: WO9514119

(56) References cited:
- DE-A- 2 315 898
- GB-A- 2 000 579
- GB-A- 2 222 238
- US-A- 3 635 459
- PATENT ABSTRACTS OF JAPAN, C-1044, page 26; & JP,A,4 329 839, (NGK INSULATORS LTD), 18 November 1992.

## Description

This invention relates to the lining of an electrolytic reduction cell for the production of aluminium and in particular to interlocking refractory slabs which prevent the passage of liquid components from the electrolytic process to the metal shell.

Cells used for the production of aluminium by electrolytic reduction conventionally comprise a metal shell lined with thermal insulation and an inner lining of carbonaceous blocks forming the cathode of the cells. The refractory insulation placed between the metal shell and the cathode blocks is designed to maintain thermal stability within the cell and provide a barrier between the steel shell and the corrosive contents of the electrolytic bath.

Conventional practice for the lining of an aluminium smelting cell involves placing a layer of refractory bricks on the base of the cell. The laying of the refractory bricks is a time consuming job requiring refractory packing or refractory mortar between each brick in order to reduce the possibility of the corrosive bath infiltrating through the refractory layer and attacking the steel shell.

In order to reduce the time required to re-line an aluminium smelting cell, recent developments have involved the use of large pre-cast refractory slabs being placed on the floor of the cell. The refractory slabs which may weigh between 700 kgs and 3000 kgs are sized such that only a small number are required to cover the floor of the cell. While this obviously reduces the number of joints in the refractory layer that have to be packed with the packing or mortar, the use of pre-cast refractory slabs involves the manoeuvring of large heavy objects into place which causes difficulties for the operators engaged in re-lining the cell. In the past it has been common for operators to position the refractory slabs in the cell by raising the slabs with chains, hooks or scissor lifters. This method of lifting and manoeuvring has several drawbacks with the major one being that it is almost impossible to place the slabs in close fit with the adjacent slab.

Due to the brittle nature of the refractory slabs, heavy contact between the slabs should be avoided. In the prior art methods using chains, hooks or scissor lifters sideways and vertical movement is necessary to position the slabs once the chains and hooks have been disengaged. Furthermore, it has been found that with the slabs laid in a conventional rectangular prism shape, the vertical surface between the abutting slabs provides a short path through the refractory layer for the molten components of the bath to attack the steel shell.

While interlocking systems suggested in the prior art increase the path length for liquid between refractory bricks, they introduce stress concentrators and other points of weakness into the shape of the inter-engaging surfaces. These shape disadvantages are less critical when dealing with the size of conventional refractory bricks but represent a serious concern when large slabs are used. Such shapes increase the likelihood of damage to the inter-engaging surfaces, increasing the reliance on filler to seal the joint and increasing the likelihood of failure of the joint.

With conventional refractory bricks with vertical abutting faces, the position where the corners of four bricks or slabs meet poses a serious risk to the protection of the steel shell because of the increased margin for error when four bricks or slabs are involved. For this reason the bricks are normally laid in overlapping layers so that a straight or short path between the bricks is avoided. However, with slabs only single layers are used.

Indicative of the prior art is the method for lining an electrolytic cell described in JP-A-4329839. This specification describes refractory bricks forming a dowel-like structure as a lining in a molten metal electrolytic cell.

US-A-3635459 also describes refractory bricks, this time for use in steel casting ladles to minimise penetration of slag into the lining formed by the courses of the refractory bricks so as to prolong the life of the refractory bricks and to improve performance and lessen maintenance.

While a number of systems for inter-engagement of the slabs have been trialed, the present inventors have found that providing acute angles and other stress concentrators into the engagement surfaces increased the possibility of the edges of the slab fracturing thus increasing the time and cost of laying the refractory layer.

It is an object of the present invention to provide an electrolytic production cell having an improved lining of refractory slabs which increases the path length for liquid between the slabs. Due to the brittle nature of the refractory it is preferred that the joining system allow the slabs to be moved into position by vertical movement only so that the acute angles and other types of stress concentrators are avoided thus minimising potential damage to the slabs.

Accordingly, the invention provides an electrolytic production cell with a refractory lining including a plurality of refractory slabs, said slabs having a top surface and a bottom surface and at least one engagement surface for interlocking engagement with a corresponding engagement surface of at least one adjacent slab, said engagement surface comprising a top region and bottom region, said top region extending from said top surface at an angle of 80° to 100° and said bottom region extending from said bottom surface at an angle of 80° to 100°, said top and bottom regions being connected by a sloping region such that the angle between the sloping region and the top and bottom regions is greater than 90°.

Preferably, the refractory slab has longitudinal and lateral engagement surfaces for engagement with corresponding engagement faces on laterally and longitudinally adjacent slabs.

Since the inter-engaging surfaces of the adjacent slabs do not provide a straight line between the slabs, the present invention is able to provide a much longer path length for any liquid between the slabs thus providing longer protection for the steel shell and less likelihood of failure of the join.

The applicants have found that if the interlocking system of the invention is used on slabs which are adjacent laterally and longitudinally, a straight path through the slab layer at the corners and edges of the slabs is eliminated.

In a further aspect, the invention provides a method for lining an electrolytic production cell with a refractory lining including a plurality of refractory slabs forming a refractory layer, each of said plurality of refractory slabs having a top surface and a bottom surface and at least one engagement surface for interlocking engagement with a corresponding engagement surface of at least an adjacent slab, said engagement surface comprising a top region and a bottom region, said top region extending from said top surface at an angle of 80° to 100° and said bottom region extending from said bottom surface at an angle of from 80° to 100°, said top and bottom regions being connected by a sloping region such that the angle between the sloping region and the top and bottom regions is greater than 90°, said method including the steps of placing a first refractory slab in the cell, placing a second refractory slab in the cell such that an engagement surface of the second refractory slab engages with a corresponding engagement surface of the first refractory slab, and sequentially placing further refractory slabs in the cell such that one or more engagement surfaces of each further refractory slabs engages with corresponding engagement surface of an adjacent slab or adjacent slabs previously placed in the cell.

Preferably, a slab is placed in the cell in an orientation whereby any free engagement surface or surfaces of the slab includes a sloping portion that slopes downwardly and outwardly. This enables further slabs to be placed in the cell with the use of vertical movement only and can avoid the requirement to laterally move a slab into engagement with other slabs once the slab has been placed in the cell.

The method of the invention is especially suitable for carrying out by means of a vacuum lifter which enables the slab to be lowered into position without the need for sideways movement of the slab to close the gap, thus minimising packing between the slabs.

A layer of packing or mortar may be applied to the joints between adjacent slabs to further seal the joint. The layer of packing or mortar may be applied to the free engagement surfaces of a slab in the cell prior to an adjacent slab being placed in the cell.

The foregoing and other features, objects and advantages of the present invention become more apparent from the following description of the preferred embodiment and accompanying drawings, in which:
Figure 1 is a perspective view of six slabs joined in accordance with the present invention;
Figure 2 is a perspective view from beneath the slab of Figure 1 with the inter-engaging faces of one slab shown in hidden detail;
Figure 3 is an orthographic plan view of the slabs of Figure 1;
Figure 4 is an orthographic plan view as viewed from position 4 in Figure 3;
Figure 5 is an orthographic plan view as viewed from position 5 in Figure 3;
Figure 6 is an exploded view of the six blocks shown in Figure 1;
Figure 7 is a perspective view of nine slabs joined in accordance with the present invention;
Figure 8 is a plan view of the arrangement shown in Figure 7;
Figure 9 is a side elevation of the arrangement of slabs in a cell having a 5 x 2 arrangement of slabs in the refractory layer; and
Figure 10 is an end elevation of the arrangement of slabs shown in figure 9.

Referring to the drawings, refractory slabs 1, 2, 3, 4, 5 and 6 are shown joined together in accordance with the present invention. Each slab is shown as inter-engaging with an adjacent slab in the longitudinal and lateral directions.

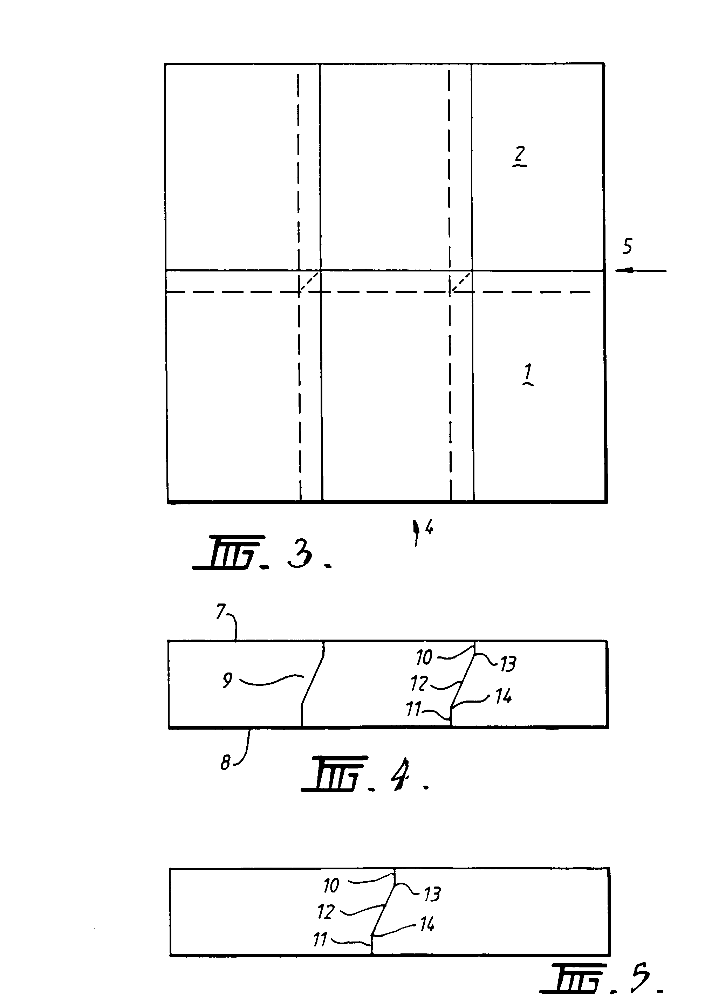

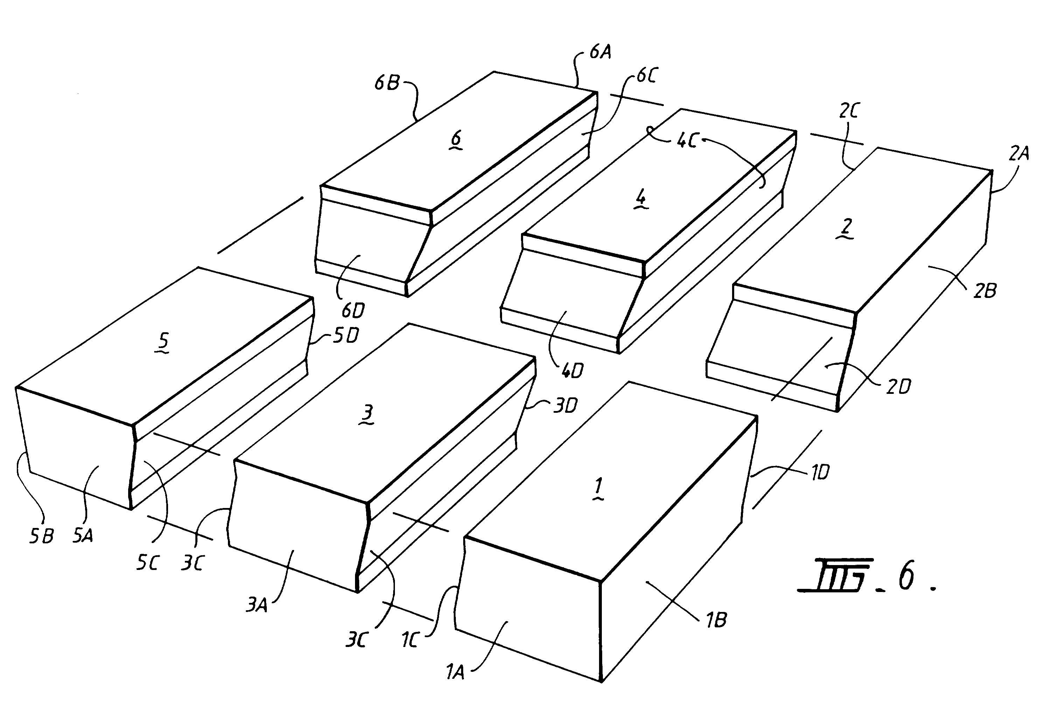

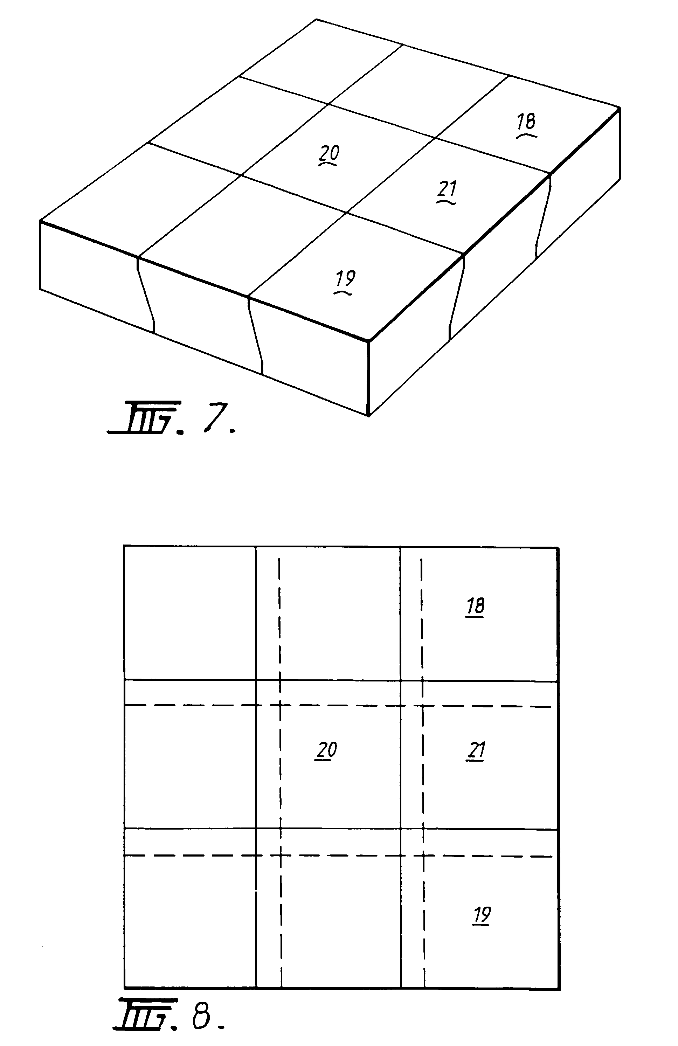

In accordance with the present invention, each slab has a top surface 7, a bottom surface 8 and at least one inter-engagement surface 9 (refer to Figure 4). The inter-engagement surface consists of a top region 10 and a bottom region 11 which extend from the respective top and bottom surface at an angle of about 90° and less than 180°. Preferably the angle is in the range of 120° to 170°, more preferably in the range of 135° to 170° and most preferably 140° to 155°.

It is preferably that the angle between the top surface and top region of the inter-engagement surface be about 90° as an increase in the angle on one inter-engagement surface will require a decrease in the angle on the corresponding inter-engagement surface of the adjacent slab. An acute angle of less that about 80° results in a structural weakness at the corner of the top surface and the top region thus increasing the likelihood of that corner being damaged while the slab is being positioned. Similarly the angle between the bottom surface and the bottom region of the inter-engagement surface should be between 80° to 100°, preferably between 85° to 95° and most preferably about 90°.

The inclined region of the inter-engagement surface extends from the top region of the surface to the bottom region. The inclined region intersects the top of bottom regions at an angle than greater than 90° and most preferably greater than 135° but less than 170°. The angle between the inclined region and the top and bottom regions is 90° or less, structural weaknesses are formed in the inter-engagement surface and corresponding surface on the adjacent slab. Also stress concentrating corners are formed at edges 13, 14 which increases the risk of a major fracture occurring in the slab.

While it may be possible to position the slabs so that a single slab extends the entire width or an electrolytic smelting cell with the inter-engaging surfaces running laterally across the cell, in the preferred form of the invention at least two slabs are used across the width of the cell. However, it should be appreciated that the number of slabs which are used across the cell will be dependent on the size of the electrolytic cell. Consequently, each slab has at least one laterally extending engagement surface and at least one longitudinally extending surface.

Each slab is made from a low cement castable refractory material such as sold by Comalco Aluminium Limited under the name of COMCAST® SCB and described in Australian Patent No. 622727 and weighs from about 700 kgs to 3000 kgs. Although the design of the invention ensures that the lines of weakness in the slab are minimised, the possibility of damage to the slabs is further reduced because only vertical movement is required for the slab to be positioned and interlock with adjacent slab or slabs.

Apparatus for lifting refractory slabs into position includes a vacuum lifting system which allows the slabs to be lifted into position without damage to the joining surfaces.

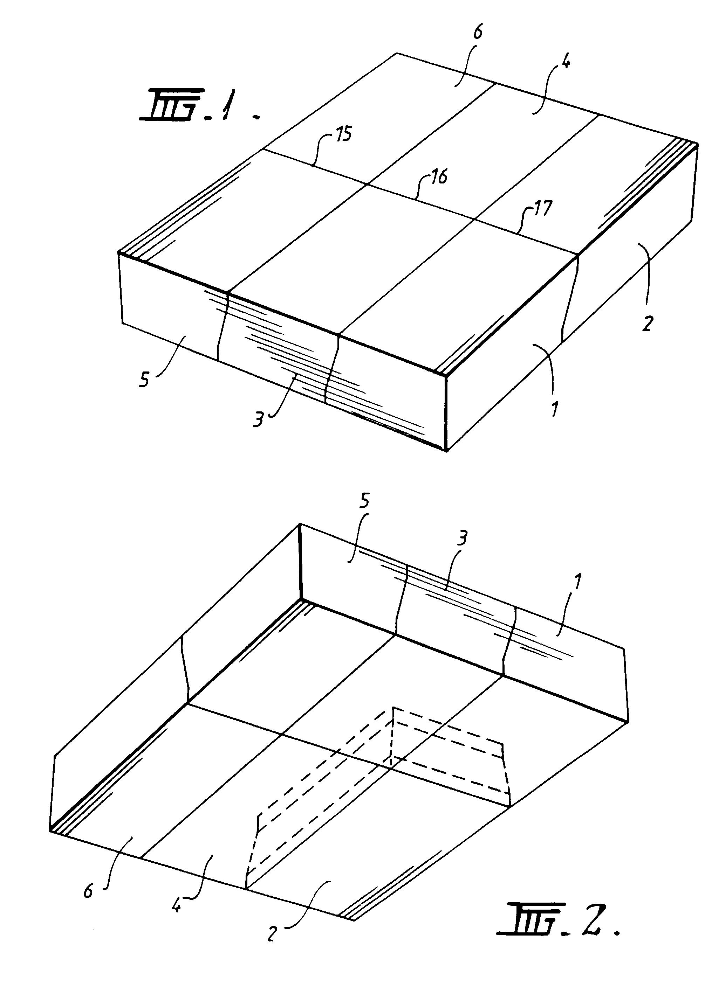

In Figure 1, the longitudinal joins 15, 16, 17 for the pairs of slabs 5, 6, 4, 5; and 1, 2 are shown as being aligned along the length of the cell.

However, if slabs 3, 4 are positioned or dimensioned such that the inclined region of join 16 slopes in the opposite direction to the inclined regions of joins 15 and 17, joins 15 and 17 will not be aligned with join 16. This positioning orientation is not shown in the accompanying drawings but may be used if alignment of the joins is not desirable and may provide a more secure joining arrangement.

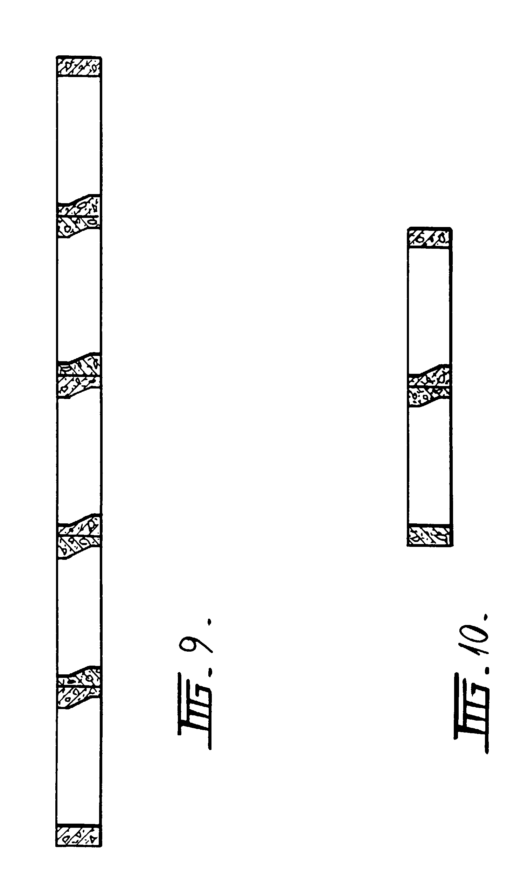

As shown in Figure 6, the slabs are designed such that each slab has engaging surfaces that engage with corresponding engaging surfaces of each adjacent slab. For example, slab 1 is designed to fit into the corner of the electrolytic cell and accordingly includes substantially vertical sides 1A and 1B that fit snugly against the vertical side walls of the cell. Slab 1 also includes engaging surfaces 1C and 1D. Engaging surface 1C engages with corresponding engaging surface 3C of slab 3 and engaging surface 1D engages with corresponding engaging surface 2D of slab 2.

Slab 2 is also a corner slab and includes substantially vertical sides 2A and 2B to fit into the corner of the cell. Engaging surface 2C engages with corresponding engaging surface 4C of adjacent slab 4. Similarly, engaging surfaces 3D and 4D of slabs 3 and 4 respectively engage each other. As is also shown in Figure 6, engaging surface 3C engages with surface 5C of adjacent slab 5 and surface 4C of slab 4 engages with surface 6C of adjacent slab 6. Surfaces 5D and 6D of slabs 5 and 6 also engage.

In one especially preferred embodiment, the refractory lining is formed by initially placing slab 2 into the cell. As can be seen from Figure 6, engaging surfaces 2C and 2D of slab 2 slope downwardly and outwardly. Slab 1 may then be placed into the cell in the orientation shown in Figure 6. As engaging surface 2D of slab 2 that has previously been placed in the cell slopes downwardly and outwardly, slab 1 can be lowered into place without requiring sideways or lateral movement of slab 1 after it has been placed on the floor of the cell. Therefore, only vertical movement of the slab is required to correctly position slab 1. Examination of Figure 6 will also show that engaging surfaces 2C and lC of slabs 2 and 1 slope downwardly and outwardly, which allows slabs 3 and 4 to be correctly positioned in the cell with only vertical lifting. It will be appreciated that slab 4 should be placed into position prior to slab 3 if only vertical movement is to be used to correctly position slab 3.

In Figure 6, the slabs may be positioned in the cell in the order of 2, 1, 4, 3, 6 then 5. Alternatively, the slabs may be positioned in the cell in the order of 2, 4, 6, 1, 3 then 5. In either case, the engaging surfaces of the slabs positioned in the cell include downwardly and outwardly sloping portions that enables the further slabs to be positioned in the cell with only vertical movement.

The embodiment shown in Figure 6 shows a cell that has six refractory slabs making the refractory layer. The slabs are arranged in a 3 x 2 configuration (i.e. 3 slabs along the length of the cell, 2 slabs across the width of the cell). This arrangement can be varied to meet the particular dimensions of any cell. For example, Figures 7 and 8 show a 3 x 3 arrangement whilst Figures 9 and 10 show a 5 x 2 arrangement.

In the arrangement shown in Figures 7 and 8 three shaped refractory slabs are used across the width of the cell. As would be appreciated by those skilled in the art, it is possible to extend this arrangement longitudinally or laterally depending on the size of the electrolytic cell. This can be done by maintaining supplies of only four basic shaped blocks 18, 19, 20 and 21.

Tests carried out by the applicants to date using the refractory slabs of the present invention to form a refractory layer in aluminium smelting cells have shown that early failure of the cells has been reduced from 25% using conventional refractory bricks to just 4% using refractory slabs of the present invention. Moreover, failure in cells using the refractory slabs of the invention was attributable to sidewall failure and not due to penetration of the refractory lining under the cathode.

Using the refractory slab system to line electrolytic cells operated by the applicant has reduced the amount of mortar used from 200 kg (in linings using refractory bricks) to just a few kilograms. In addition, the time required to install the lining has been reduced from 60 man hours (using refractory bricks) to about 4 man hours, which represents a significant saving.

The design of the refractory slabs of the present invention is very robust and the slabs are less likely to be damaged by handling. This leads to reductions in the scrap rates of the slabs.

## Claims

1. An electrolytic production cell with a refractory lining including a plurality of refractory slabs (1,2,3,4,5,6), said slabs having a top surface (27) and a bottom surface (8) and at least one engagement surface (9) for interlocking engagement with a corresponding engagement surface of at least one adjacent slab, said engagement surface (9) comprising a top region (10) and bottom region (11), said top region (10) extending from said top surface (7) at an angle of 80° to 100° and said bottom region (11) extending from said bottom surface (8) at an angle of 80° to 100°, said top and bottom regions (10,11) being connected by a sloping region (12) such that the angle between the sloping region (12) and the top and bottom regions (10,11) is greater than 90°.

2. An electrolytic production cell as claimed in claim 1 wherein the angle between the sloping region (12) and the top and bottom regions (10,11) is from 135° to 170°.

3. An electrolytic production cell as claimed in claim 2 wherein the angle between the sloping region (12) and the top and bottom regions (10,11) is from about 140° to 155°.

4. An electrolytic production cell as claimed in claim 1 wherein said top region (10) extends from said top surface (7) at an angle of 85° to 95° and said bottom region (11) extends from said bottom surface (8) at an angle of 85° to 95°.

5. An electrolytic production cell as claimed in claim 4 wherein said top and bottom regions (10,11) extend from said respective top and bottom surfaces (7,8) at an angle of about 90°.

6. An electrolytic production cell as claimed in any one of the preceding claims wherein said refractory slab (1,2,3,4,5,6) has longitudinal and lateral engagement surfaces (9) for engagement with corresponding engaging surfaces on laterally and longitudinally adjacent slabs (1,2,3,4,5,6).

7. A method for lining an electrolytic production cell with a refractory lining including a plurality of refractory slabs (1,2,3,4,5,6) forming a refractory layer, each of said plurality of refractory slabs having a top surface (7) and a bottom surface (8) and at least one engagement surface (9) for interlocking engagement with a corresponding engagement surface (9) of at least one adjacent slab, said engagement surface (9) comprising a top region (10) and a bottom region (11), said top region (10) extending from said top surface (7) at an angle of 80° to 100° and said bottom region (11) extending from said bottom surface (8) at an angle of from 80° to 100°, said top and bottom regions (10,11) being connected by a sloping region (12) such that the angle between the sloping region (12) and the top and bottom regions (10,11) is greater than 90°, said method including the steps of placing a first refractory slab in the cell, placing a second refractory slab in the cell such that an engaging surface (9) of the second refractory slab engages with a corresponding engaging surface of the first refractory slab, and sequentially placing further refractory slabs in the cell such that one or more engaging surfaces (9) of each further refractory slab engages with corresponding engaging surface of an adjacent slab or adjacent slabs previously placed in the cell.

8. A method as claimed in claim 7 wherein a slab is placed in the cell such that any free engagement surface (9) of said slab includes a sloping portion that slopes downwardly and outwardly to thereby enable an adjacent slab to be placed in position in the cell by vertical movement.

9. A method as claimed in claim 7 or claim 8 wherein a layer of mortar or packing is applied to joints (15,16,17) between adjacent slabs.

10. A method as claimed in claim 9 wherein the layer of packing or mortar is applied to a free engagement surface (9) of a slab prior to an adjacent slab being placed in the cell.

## Patentansprüche

1. Elektrolytische Herstellungszelle mit einer feuerfesten Auskleidung, die eine Vielzahl feuerfester Platten enthält (1, 2, 3, 4, 5, 6), wobei die Platten eine obere Fläche (7) und eine untere Fläche (8) sowie wenigstens eine Kontaktfläche (9) zum ineinandergreifenden Kontakt mit einer entsprechenden Kontaktfläche wenigstens einer angrenzenden Platte aufweisen, die Kontaktfläche (9) einen oberen Bereich (10) und einen unteren Bereich (11) umfaßt, sich der obere Bereich (10) von der oberen Fläche (7) aus in einem Winkel von 80°C bis 100°C erstreckt und sich der untere Bereich (11) von der unteren Fläche (8) aus in einem Winkel von 80°C bis 100°C erstreckt, und der obere und der untere Bereich (10, 11) durch einen schrägen Bereich (12) so miteinander verbunden sind, daß der Winkel zwischen dem schrägen Bereich (12) und dem oberen sowie dem unteren Bereich (10, 11) größer ist als 90°C.

2. Elektrolytische Herstellungszelle nach Anspruch 1, wobei der Winkel zwischen dem schrägen Bereich (12) und dem oberen sowie dem unteren Bereich (10, 11) zwischen 135° bis 170° liegt.

3. Elektrolytische Herstellungszelle nach Anspruch 2, wobei der Winkel zwischen dem schrägen Bereich (12) und dem oberen sowie dem unteren Bereich (10, 11) zwischen ungefähr 140° und 155° liegt.

4. Elektrolytische Herstellungszelle nach Anspruch 1, wobei sich der obere Bereich (10) von der oberen Fläche (7) aus in einem Winkel von 85° bis 95° erstreckt und sich der untere Bereich (11) von der unteren Fläche (8) aus in einem Winkel von 85° bis 95° erstreckt.

5. Elektrolytische Herstellungszelle nach Anspruch 4, wobei sich der obere und der untere Bereich (11) von der oberen bzw. der unteren Fläche (7, 8) aus in einem Winkel von ungefähr 90° erstrecken.

6. Elektrolytische Herstellungszelle nach einem der vorangehenden Ansprüche, wobei die feuerfeste Platte (1, 2, 3, 4, 5, 6) Längs- und Querkontakfflächen (9) aufweist, die mit entsprechenden Kontakfflächen in Längsrichtung und in Querrichtung angrenzender Platten (1, 2, 3, 4, 5, 6) in Kontakt kommen.

7. Verfahren zum Auskleiden einer elektrolytischen Herstellungszelle mit einer feuerfesten Auskleidung, die eine Vielzahl feuerfester Platten (1, 2, 3, 4, 5, 6) enthält, die eine feuerfeste Schicht bilden, wobei jede der Vielzahl feuerfester Platten eine obere Fläche (7) und eine untere Fläche (8) sowie wenigstens eine Kontaktfläche (9) zum ineinandergreifenden Kontakt mit einer entsprechenden Kontaktfläche (9) wenigstens einer angrenzenden Platte aufweist, die Kontaktfläche (9) einen oberen Bereich (10) und einen unteren Bereich (11) umfaßt, sich der obere Bereich (10) von der oberen Fläche (7) aus in einem Winkel von 80°C bis 100°C erstreckt und sich der untere Bereich (11) von der unteren Fläche (8) aus in einem Winkel von 80°C bis 100°C erstreckt, und der obere und der untere Bereich (10, 11) durch einen schrägen Bereich (12) so miteinander verbunden sind, daß der Winkel zwischen dem schrägen Bereich (12) und dem oberen sowie dem unteren Bereich (10, 11) größer ist als 90°C, wobei das Verfahren die Schritte des Einlegens einer ersten feuerfesten Platte in die Zelle, des Einlegens einer zweiten feuerfesten Platte in die Zelle auf eine Weise, durch die eine Kontaktfläche (9) der zweiten feuerfesten Platte mit einer entsprechenden Kontaktfläche der ersten feuerfesten Platte in Kontakt kommt, sowie des anschließenden Einlegens weiterer feuerfester Platten in die Zelle auf eine Weise einschließt, durch die eine oder mehrere Kontakfflächen (9) jeder weiteren feuerfesten Platte mit einer entsprechenden Kontaktfläche einer angrenzenden Platte bzw. angrenzender Platten in Kontakt kommt, die bereits in die Zelle eingelegt wurden.

8. Verfahren nach Anspruch 7, wobei eine Platte so in die Zelle eingelegt wird, daß jede freie Eingriffsfläche (9) der Platte einen schrägen Abschnitt enthält, der nach unten und nach außen abgeschrägt ist, so daß eine angrenzende Platte durch vertikale Bewegung in der Zelle positioniert werden kann.

9. Verfahren nach Anspruch 7 oder 8, wobei eine Schicht Mörtel oder Dichtungsmittel auf die Fugen (15, 16, 17) zwischen aneinandergrenzenden Platten aufgetragen wird.

10. Verfahren nach Anspruch 9, wobei die Schicht aus Dichtungsmittel oder Mörtel auf eine freie Kontaktfläche (9) aufgetragen wird, bevor eine angrenzende Platte in die Zelle eingelegt wird.

## Revendications

1. Cellule de production électrolytique à revêtement réfractaire comprenant une pluralité de briques réfractaires (1,2,3,4,5,6), lesdites briques présentant une surface supérieure (7) et une surface inférieure (8) et au moins une surface d'accouplement (9) pour interconnexion avec une surface d'accouplement correspondante d'au moins une brique adjacente, ladite surface d'accouplement (9) comprenant une région supérieure (10) et une région inférieure (11), ladite région supérieure (10) s'étendant à partir de ladite surface supérieure (7) suivant un angle de 80° à 100° et ladite région inférieure (11) s'étendant à partir de ladite surface inférieure (8) suivant un angle de 80° à 100°, lesdites régions supérieure et inférieure (10, 11) étant connectées par une région oblique (12) telle que l'angle entre la région oblique (12) et les régions supérieure et inférieure (10,11) est supérieur à 90°.

2. Cellule de production électrolytique selon la revendication 1, dans laquelle l'angle entre la région oblique (12) et les régions supérieure et inférieure (10,11) est compris entre 135° et 170°.

3. Cellule de production électrolytique selon la revendication 2, dans laquelle l'angle entre la région oblique (12) et les régions supérieure et inférieure (10, 11) est compris entre 140° et 155° environ.

4. Cellule de production électrolytique selon la revendication 1, dans laquelle ladite région supérieure (10) s'étend à partir de ladite surface supérieure (7) suivant un angle de 85° à 95° et ladite région inférieure (11) s'étend à partir de ladite surface inférieure (8) suivant un angle de 85° à 95°.

5. Cellule de production électrolytique selon la revendication 4, dans laquelle lesdites régions supérieure et inférieure (10,11) s'étendent à partir desdites surfaces supérieure et inférieure respectives (7,8) suivant un angle de 90° environ.

6. Cellule de production électrolytique selon une quelconque des revendications précédentes, dans laquelle ladite brique réfractaire (1,2,3,4,5,6) présente des surfaces d'accouplement longitudinales et latérales (9) pour venir en prise avec des surfaces d'accouplement correspondantes sur des briques latéralement et longitudinalement adjacentes (1,2,3,4,5,6).

7. Procédé de revêtement d'une cellule de production électrolytique avec un revêtement réfractaire comprenant une pluralité de briques réfractaires (1,2,3,4,5,6) qui constituent une couche réfractaire, chacune de ladite pluralité de briques réfractaires présentant une surface supérieure (7) et une surface inférieure (8) et au moins une surface d'accouplement (9) pour interconnexionavec une surface d'accouplement correspondante (9) d'au moins une brique adjacente, ladite surface d'accouplement (9) comprenant une région supérieure (10) et une région inférieure (11), ladite région supérieure (10) s'étendant à partir de ladite surface supérieure (7) suivant un angle de 80° à 100° et ladite région inférieure (11) s'étendant à partir de ladite surface inférieure (8) suivant un angle de 80° à 100° , lesdites régions supérieure et inférieure (10,11) étant reliées par une région oblique (12) telle que l'angle entre la région oblique (12) et les régions supérieure et inférieure (10,11) est supérieur à 90°, ledit procédé incluant les étapes de mise en place d'une première brique réfractaire dans la cellule, de mise en place d'une deuxième brique réfractaire dans la cellule de sorte qu'une surface d'accouplement (9) de la deuxième brique réfractaire soit en prise avec une surface d'accouplement correspondante de la première brique réfractaire, et de mise en place séquentiellement d'autres briques réfractaires dans la cellule de sorte qu'une ou plusieurs surfaces d'accouplement (9) de chaque autre brique réfractaire soient en prise avec une surface d'accouplement correspondante d'une brique adjacente ou de briques adjacentes précédemment placées dans la cellule.

8. Procédé selon la revendication 7, dans lequel une brique est placée dans la cellule d'une manière telle que toute surface d'accouplement libre (9) de ladite brique présente une partie oblique qui s'incline vers le bas et vers l'extérieur afin de permettre de placer une brique adjacente en position dans la cellule par un mouvement vertical.

9. Procédé selon la revendication 7 ou la revendication 8, dans lequel on applique une couche de mortier ou de garnissage aux joints (15,16,17) entre briques adjacentes.

10. Procédé selon la revendication 8, dans lequel on applique la couche de mortier ou de garnissage à une surface d'accouplement libre (9) d'une brique avant de placer une brique adjacente dans la cellule.
